Europäisches Patentamt

European Patent Office

Office européen des brevets

(11) Publication number: **0 210 629 B1**

# EUROPEAN PATENT SPECIFICATION

(45) Date of publication of patent specification: **04.03.92**

(51) Int. Cl.⁵: **G11B 27/19**, G11B 7/00, G11B 27/24

(21) Application number: **86110388.5**

(22) Date of filing: **28.07.86**

(54) **An information-processing apparatus.**

(30) Priority: **29.07.85 JP 167231/85**
  **29.07.85 JP 167232/85**

(43) Date of publication of application:
  **04.02.87 Bulletin 87/06**

(45) Publication of the grant of the patent:
  **04.03.92 Bulletin 92/10**

(84) Designated Contracting States:
  **DE FR GB NL**

(56) References cited:
  **EP-A- 0 069 218**
  **EP-A- 0 116 315**
  **EP-A- 0 159 090**
  **EP-A- 0 164 175**
  **FR-A- 2 557 345**

(73) Proprietor: **KABUSHIKI KAISHA TOSHIBA**
  **72, Horikawa-cho Saiwai-ku**
  **Kawasaki-shi Kanagawa-ken 210(JP)**

(72) Inventor: **Tabe,Koichi c/o Patent Division**
  **KABUSHIKI KAISHA TOSHIBA 1-1 Shibaura**
  **1-chome**
  **Minato-ku Tokyo 105(JP)**
  Inventor: **Saito, Tetsuo c/o Patent Division**
  **KABUSHIKI KAISHA TOSHIBA 1-1 Shibaura**
  **1-chome**
  **Minato-ku Tokyo 105(JP)**
  Inventor: **Ohtomo, Junichi c/o Patent Division**
  **KABUSHIKI KAISHA TOSHIBA 1-1 Shibaura**
  **1-chome**
  **Minato-ku Tokyo 105(JP)**

(74) Representative: **Henkel, Feiler, Hänzel & Part-**
  **ner**
  **Möhlstrasse 37**
  **W-8000 München 80(DE)**

EP 0 210 629 B1

## Description

The present invention relates to an information-processing apparatus for recording and/or reproducing information signals on and/or from a recording layer of an optical disk by projecting a laser beam on the recording layer of the optical disk, and an optical disk of which the recording layer is having a predetermined property which includes at least one of laser-beam reflection factor, the polarity of the information signal recorded on the layer, and threshold power value which is measured at the layer and indicates the maximum poer value of the laser beam allowed to be applied on the layer.

The present optical disks can be roughly classified into a reproduction only type, such as a compact disk or a video disk, in which only reproduction is possible, a recording/reproduction type, in which recording and reproduction are only possible, and an erasable type, in which recording, reproduction, and erasure are possible. In any types of optical disks, the information processing (recording, reproduction, and erasure) on the layer is effected by use of a laser beam. In these existing optical disks, the materials for the recording layer can be classified into two main groups, i.e., organic and inorganic films.

Inorganic recording layers include pitted, phase-variation, and bubbled types, while organic ones include pitted and molecular-variation types. In these various types of recording layers, their laser-beam reflection factor varies, depending on their materials and production processes.

Moreover, record signals, recorded on these conventional recording layers, have different polarity. The polarity difference is caused by two cases, in one case laser-beam reflection factor at signal recorded regions on the layer, on which the record signals are recorded, being higher than that at no-signal recorded regions on the layer, on which no signals are recorded, and in another case said factor at signal recorded regions being lower than at no-signal recorded regions.

The threshold power value of the laser beam power source also varies, depending on the type of the recording layer.

For these reasons, the prior art optical disks cannot be used in any information-processing apparatuses other than their own exclusive ones. In other words, each information-processing apparatus can use only an optical disk of a specified type.

EP-A-0 159 090 discloses an equipment which enables the user of a compact disk player to read the words - titles and interprets or the like - inscribed on a compact disk while the compact disk is rotating at operational speed of 200 rpm. This is achieved by making use of the stroboscopic effect.

The compact disk player according to the prior art can handle only one type of disk and hence does not need any information about the recording layer of the disc currently under use. Beyond that, the information gained from the printing on the surface of the disk is meant for the user rather than for the apparatus itself.

The present invention has been contrived in consideration of these circumstances, and is intended to improve an information-processing apparatus and an information-storage medium, such as an optical disk, so that various types of such information-storage media can be used in a single information-processing apparatus.

The above object of the invention is achieved by said optical disk being provided with means for indicating the property of the recording layer at a position independent of the recording layer, the indicating means being readable by means of the laser beam, and said information-processing apparatus being provided with means for detecting the indicating means and for controlling the laser beam projecting on the recording layer in accordance with the detected property of the recording layer, so that the laser beam properly records and/or reproduces information signals on and/or from the recording layer.

According to the invention, moreover, the information-storage medium may be housed in a cassette for protection. In this case, the indicating means can be provided on the cassette.

This invention can be more fully understood from the following detailed description when taken in conjunction with the accompanying drawings, in which:

Fig. 1 is a perspective view schematically showing an optical disk, as an information-storage medium according to a first embodiment of the present invention, and an information-processing apparatus using the disk, the disk being housed in a cassette for protection, and indicating means, indicating the properties of a recording layer of the disk, being provided on the cassette;

Fig. 2 is a schematic view showing a bar code, as a first example of indicating means on the cassette of the optical disk of Fig. 1;

Fig. 3 is a schematic view showing a magnetic tape, as a second example of indicating means;

Fig. 4 is a schematic view showing a label, on which signs are printed, as a third example of indicating means;

Fig. 5 is a schematic view showing a combination of depressions and projections, as a fourth example of indicating means;

Fig. 6 is a perspective view schematically showing a modified example of the position of the indicating means on the optical disk cassette; and

Fig. 7 is a perspective view schematically showing an optical disk, as an information-storage medium according to a second embodiment of the invention, and an information-processing apparatus using the disk, the disk being not housed in a cassette for protection, and indicating means, indicating the properties of a recording layer of the disk, being provided directly on the disk.

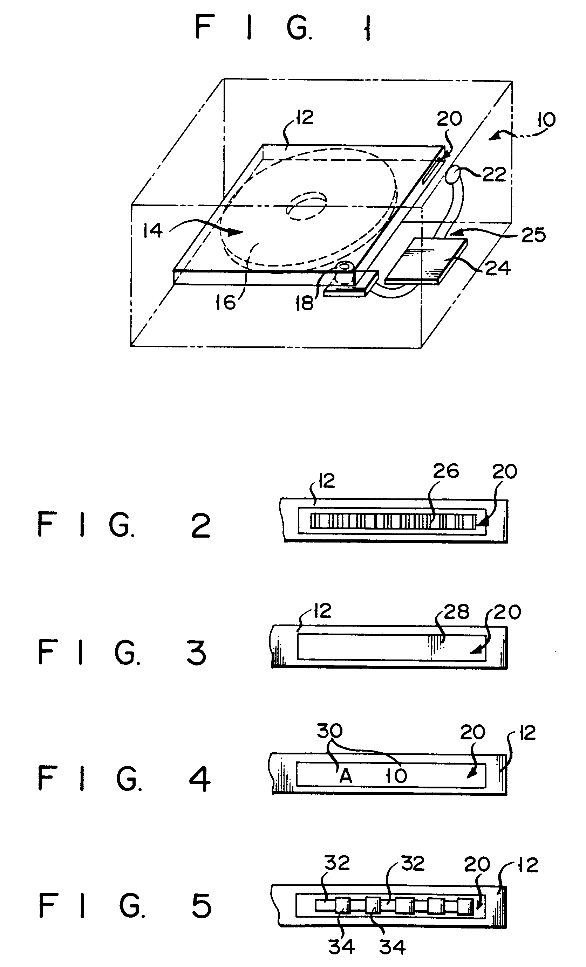

In Fig. 1, reference numeral 10 designates an information-processing apparatus according to a first embodiment of the present invention. Planar cassette 12 is removably housed in apparatus 10. Cassette 12 contains optical disk 14, for use as one kind of informationstorage mediums. In this disk 14, recording layer 16, which is adapted for information recording, reproduction, and erasure by use of a laser beam, is formed on a base plate, on which a spiral groove or concentrical grooves is formed in advance. The information is image information, such as characters and drawings. The optical disk of this type is well-known in the art.

Optical head 18 is also mounted in information-processing apparatus 10 to face the lower surface of cassette 12 of optical disk 14. Optical head 18 includes a semiconductor laser as a laser power source, an objective for converging a laser-beam from the semiconductor laser on recording layer 16 of optical disk 14, a reflecting light detector for detecting the reflecting light and conversing the reflecting light to electric signals, means for controlling the power of the laser power source, and means for information reproduction in accordance with the electric signals. This type of opti-cal head 18 is well known in the art. Head 18 is movable in the radial direction of optical disk 14. While disk 14 is being rotated in apparatus 10, head 18 moves in the radial direction, thereby effecting recording, repro-duction, or erasure of information on recording layer 16 of disk 14, through the medium of the laser beam.

Indicating means 20 is provided on a peripheral surface of cassette 12 of optical disk 14. The indicating means indicated some properties of recording layer 16 of disk 14, for external reference. These properties include the laser-beam reflection factor of layer 16, the polarity of the information signals recorded on layer 16 (based on the level of reflection factor on the recorded region of layer 16 in comparison with that on the unrecorded region of layer 16), the threshold power value of the power source of the laser beam, applied from optical head 18 of information-processing apparatus 10 to layer 16, and other physical constants.

Information-processing apparatus 10 further contains property-reading means 22, which serves to read the aforesaid properties indicated by indicating means 20 on cassette 12. The reading means is connected to control part 24, which is formed, for example, of an electric circuit, inside apparatus 10. Optical head 18 is also connected to control part 24. Control part 24 and optical head 18 constitute information-processing means 25.

Control part 24 controls the operation of optical head 18, in accordance with the properties of recording layer 16, read from indicating means 20 of cassette 12 by reading means 22. Thus, head 18 can suitably perform information recording, reproduction, or erasure on layer 16. In the control of the operation of optical head 18, changes in power value of the power source of the laser beam and in a conversion process to the electric signals in the reflecting light detector, in accordance with the laser-beam reflection factor in layer 16, the polarity of the information signals recorded on layer 16, the threshold power value of the power source of the laser-beam, and other physical constants, are included.

In the information-processing apparatus 10 of the invention, as described in detail above, the operation of optical head 18 is controlled by control part 24 so as to make it possible that optical head 18 records, reproducts, and erases informations on and from recording layer 16 in accordance with the properties of layer 16, the properties being read through reading means 22 from indicating means 20 on cassette 12 of optical disk 14 mounted in information-processing apparatus 10. Therefor, if various optical disks having recording layers of different properties are used in one information-processing apparatus, the information-processing apparatus can record, reproduct, and erase informations on and from any one of the recording layers of various optical disks.

It is to be understood that the present invention is not limited to the embodiment described above, and that various changes and modifications may be effected therein by one skilled in the art without departing from the scope or spirit of the invention.

For example, indicating means 20 may be formed of bar code 26, as shown in Fig. 2. The bar code 26 may be printed directly on cassette 12 of optical disk 14, or may be printed on a label which is to be pasted on the cassette, thereafter. In this case, reading means 22 of information-processing apparatus 10 must be a bar-code reader.

Alternatively, the indicating means 20 may be formed of magnetic tape 28 on which magnetic signals, indicating the aforesaid properties, are recorded, as shown in Fig. 3. In this case, reading means 22 must be a magnetic-signal reader, such as a magnetic head.

As shown in Fig. 4, moreover, the indicating means 20 may be formed of a combination of signs 30, such as characters and figures. Signs 30 may be printed directly on cassette 12 of optical disk 14, or may be printed on a label which is to be pasted on the cassette, thereafter. In this case, reading means 22 must be a sign discriminator.

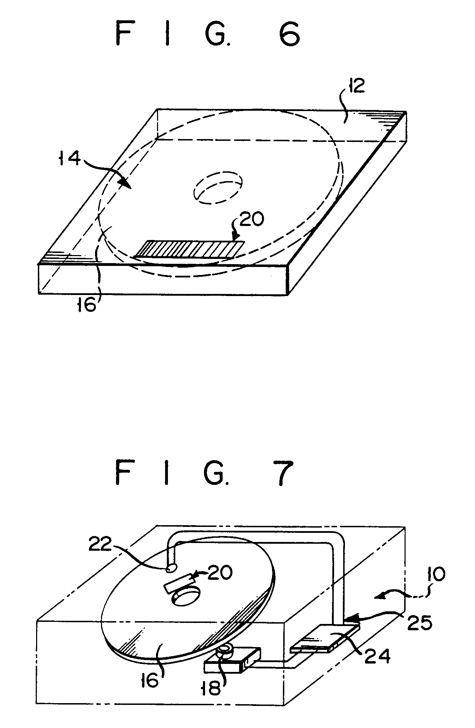

As shown in Fig. 5, furthermore, the indicating means 20 may be a combination of depressions 32 and projections 34. In this case, reading means 22 may be an optical irregularity discriminator, or a mechanical one which uses a plurality of feelers.

Further, indicating means 20 may alternatively be located on an upper and/or lower surfaces of cassette 12, as shown in Fig. 6.

As shown in Fig. 7, furthermore, indicating means 20 may be directly provided on optical disk 14.

Recording layer 16 may be a reproduction only type, in which only reproduction is possible, and may be a recording/reproduction type, in which recording and reproduction are only possible.

## Claims

1. An information-processing apparatus (10) for recording and/or reproducing information signals on and/or from a recording layer (16) of an optical disk (14) by projecting a laser beam on the recording layer (16) of the optical disk, and a optical disk (14) of which the recording layer (16) is having a predetermined property which includes at least one of laser-beam reflection factor, the polarity of the information signal recorded on the layer, and threshold power value which is measured at the layer and indicates the maximum power value of the laser beam allowed to be applied on the layer,

   characterized in that

   said optical disk (14) is provided with means (20) for indicating the property of the recording layer (16) at a position independent of the recording layer (16), the indicating means (20) being readable by means of the laser beam, and

   said information-processing apparatus (10) is provided with means (18, 24) for detecting the indicating means (20) and for controlling the laser beam projecting on the recording layer in accordance with the detected property of the recording layer, so that the laser beam properly records and/or reproduces information signals on and/or from the recording layer.

2. The information-processing apparatus (10) and the optical disk (14) as claimed in claim 1, wherein said means (20) for indicating the property of the recording layer (16) of said optical disk (14) is provided on a peripheral surface of a cassette (12) wherein said optical disk (14) is being housed.

## Revendications

1. Appareil (10) de traitement d'information, destiné à enregistrer et/ou à lire des signaux d'information sur une couche d'enregistrement (16) d'un disque optique (14), par projection d'un faisceau laser sur la surface d'enregistrement (16) du disque optique, et disque optique (14) dont la couche d'enregistrement (16) a une propriété prédéterminée qui comprend au moins une propriété parmi un facteur de réflexion du faisceau laser, la polarité du signal d'information enregistré sur la couche, et la valeur d'une puissance de seuil qui est mesurée au niveau de la couche et indique la valeur maximale de la puissance du faisceau laser qui peut être appliquée à la couche,

   caractérisé en ce que :

   le disque optique (14) comprend un dispositif (20) destiné à indiquer la propriété de la couche d'enregistrement (16) à un emplacement indépendant de la couche d'enregistrement (16), le dispositif indicateur (20) pouvant être lu à l'aide du faisceau laser, et

   l'appareil (10) de traitement d'information comporte un dispositif (18, 24) destiné à détecter le dispositif indicateur (20) et à commander le faisceau laser projeté sur la couche d'enregistrement en fonction de la propriété détectée de la couche d'enregistrement, si bien que le faisceau laser permet l'enregistrement convenable des signaux d'information sur la couche d'enregistrement et/ou la lecture de ces signaux de la couche.

2. Appareil de traitement d'information (10) et disque optique (14) selon la revendication 1, dans lesquels le dispositif (20) destiné à indiquer la propriété de la couche d'enregistrement (16) du disque optique (14) est placé sur une surface périphérique d'une cassette (12) dans laquelle le disque optique (14) est logé.

## Patentansprüche

1. Informationsverarbeitungsgerät (10) zum Aufnehmen und/oder Wiedergeben von Informationssignalen auf und/oder von einer Aufzeichnungsschicht (16) einer optischen Platte (14) durch Projizieren bzw. Aufstrahlen eines Laserstrahls auf die Aufzeichnungsschicht (16) der optischen Platte, einschließlich einer optischen Platte (14), deren Aufzeichnungsschicht (16) eine vorbestimmte Eigenschaft aufweist, welche mindestens einen Laserstrahl-Reflexionsfaktor, die Polarität des auf der Schicht aufgezeichneten Informationssignals und/oder einen Leistungsschwellenwert, der an der Schicht gemessen ist und die maximale Leistungsgröße des Laserstrahls angibt, der auf die Schicht aufgestrahlt werden kann, umfaßt,
dadurch gekennzeichnet, daß
die optische Platte (14) mit einem Mittel (20) zum Anzeigen der Eigenschaft der Aufzeichnungsschicht (16) an einer von der Aufzeichnungsschicht (16) unabhängigen oder getrennten Stelle versehen ist, wobei das Anzeigemittel (20) mittels des Laserstrahls lesbar ist, und das Informationsverarbeitungsgerät (10) mit einer Einrichtung (18, 24) zum Erfassen des Anzeigemittels (20) und zum Steuern des auf die Aufzeichnungsschicht aufgestrahlten Laserstrahls in Abhängigkeit von der erfaßten Eigenschaft der Aufzeichnungsschicht versehen ist, so daß der Laserstrahl Informationssignale einwandfrei auf der Aufzeichnungsschicht aufzeichnet und/oder aus ihr wiedergibt.

2. Informationsverarbeitungsgerät (10) mit optischer Platte (14) nach Anspruch 1, dadurch gekennzeichnet, daß das Mittel (20) zum Anzeigen der Eigenschaft der Aufzeichnungsschicht (16) der optischen Platte (14) an der Umfangsfläche einer Kassette (12) vorgesehen ist, in welcher die optische Platte (14) untergebracht ist.

F I G. 1

F I G. 2

F I G. 3

F I G. 4

F I G. 5

# F I G. 6

# F I G. 7